(19) Europäisches Patentamt
European Patent Office
Office européen des brevets

(11) EP 1 857 487 A1

(12) EUROPEAN PATENT APPLICATION
published in accordance with Art. 158(3) EPC

(43) Date of publication:
**21.11.2007 Bulletin 2007/47**

(21) Application number: **05738616.1**

(22) Date of filing: **10.05.2005**

(51) Int Cl.:
***C08G 67/02*** *(2006.01)*

(86) International application number:
**PCT/JP2005/008491**

(87) International publication number:
**WO 2006/095452 (14.09.2006 Gazette 2006/37)**

(84) Designated Contracting States:
**AT BE BG CH CY CZ DE DK EE ES FI FR GB GR HU IE IS IT LI LT LU MC NL PL PT RO SE SI SK TR**

(30) Priority: **08.03.2005 JP 2005063475**

(71) Applicants:
- **Asahi Kasei Chemicals Corporation**
  **Tokyo 100-8440 (JP)**
- **Asahi Kasei Fibers Corporation**
  **Osaka-shi,**
  **Osaka 530-8205 (JP)**

(72) Inventors:
- **WATANABE, Tomonari**
  **Kanagawa 2420028 (JP)**
- **KOMATSU, Takashi**
  **Miyazaki 8820846 (JP)**
- **KATO, Jinichiro**
  **Miyazaki 8820036 (JP)**
- **YONEMURA, Masami**
  **Okayama 7100847 (JP)**
- **EBARA, Kenji**
  **Okayama 7100823 (JP)**

(74) Representative: **Bradley, Josephine Mary et al**
**D Young & Co**
**120 Holborn**
**London EC1N 2DY (GB)**

# (54) ALIPHATIC KETONE POLYMER

(57) An aliphatic ketone polymer comprising a unit represented by the following formula (1), the unit represented by the following formula (2), and a unit represented by the following formula (3) or (4). (In the formulae, $R^1$ to $R^{10}$ may be the same or different and each represents hydrogen, an optionally halogenated $C_{1-20}$ hydrocarbon group, halogeno, hydroxy, ester, alkoxy, cyano, imide, silyl, or a group selected from the group consisting of $C_{1-20}$ hydrocarbon groups substituted by a functional group selected among hydroxy, ester, alkoxy, cyano, imide, and silyl, provided that $R^2$ and $R^8$may be bonded to $R^3$ and $R^9$. respectively, to form a monocycle or polycycle; and $n_1$, $n_2$, and $N_3$ satisfy $1 \leq n_1 \leq 20$, $1 \leq n_2 \leq 35{,}000$, and $1 \leq n_3 \leq 40{,}000$.)



Printed by Jouve, 75001 PARIS (FR)

## Description

### TECHNICAL FIELD

The present invention relates to an aliphatic ketone polymer exhibiting melt formability for industrial use and high mechanical properties, and a shaped article made of the aliphatic ketone polymer.

### BACKGROUND ART

The aliphatic polyketone is known as a copolymer composed of a carbon monoxide unit and at least one ethyleneically unsaturated compound such as ethylene, propylene, or aromatic vinyl compounds. In particular, an aliphatic polyketone (poly(1-oxotrimethylene), hereafter abbreviated as ECO) in which a carbon monoxide unit and an ethylene unit are arranged completely alternately and which is represented by the following formula (5) where $n_x$ satisfies $1 \leq n_x \leq 20{,}000$ is recognized as being excellent in mechanical properties, and having high wear resistance, chemical resistance, and gas barrier properties.

[Formula 1]

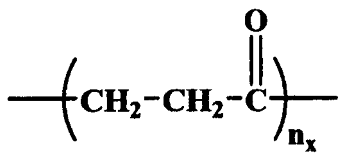

. . . (5)

However, ECO has a drawback of exhibiting insufficient melt formability for industrial use because ECO has a high melting point (Tm=260°C) and a high degree of crystallinity. For example, ECO requires a high forming temperature (typically, Tm +20 to +30°C) equal to or higher than 260°C. As a result, a thermal crosslinking reaction represented by aldol condensation caused at the time of being heated and melted is promoted, and thus ECO easily loses its flowability. In addition, obtained shaped articles have considerably deteriorated mechanical and thermal properties. Therefore, ECO cannot be processed by melt forming at present (for example, see Patent Document 1).

By the way, a method of providing melt formability to ECO is disclosed. For example, there is disclosed a method of copolymerizing several mole% of $\alpha$-olefin represented by propylene with ECO to provide a random copolymer. A polyketone terpolymer (hereafter abbreviated as EPCO) in which 6 mole% of propylene is copolymerized has a decreased melting point (up to 220°C) and thus the polymer is improved so that forming can be conducted under low temperatures. A forming temperature is a factor to promote a thermal crosslinking reaction. However, hydrogen on a tertiary carbon atom (the carbon atom to which X is linked in the following formula (6)) derived from propylene in EPCO is chemically active. As a result, the thermal crosslinking proceeds even under low forming temperatures so that it is difficult to conduct continuous melt forming. In addition, EPCO has a degraded degree of crystallinity such as about 30%. Consequently, EPCO has a drawback of compromising features of ECO such as mechanical properties and gas barrier properties (for example, see Patent Document 2).

[Formula 2]

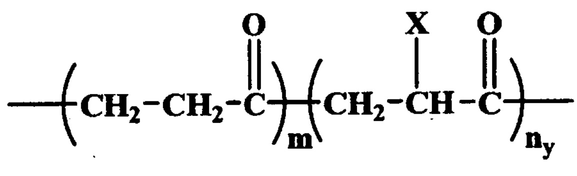

. . . (6)

wherein X represents a hydrocarbon group having one or more carbon atoms; and m and $n_y$ satisfy $1 \leq m \leq 20{,}000$ and

$1 \leq n_y \leq 2,000$ .

By the way, there is disclosed a technique of enhancing thermal stability of an aliphatic polyketone at the time of melt forming. For example, disclosed is a method in which hydroxyapatite is added to an aliphatic polyketone to enhance stability of the aliphatic polyketone at the time of melting. Use of this method can suppress reduction of flowability of an aliphatic polyketone at the time of melting to some degree caused by heat deterioration. However, in order to obtain this effect sufficiently, large amounts of hydroxyapatite must be used. Therefore, the method has an economical drawback for industrial use (for example, see Patent Document 3).

As an example of a polyketone derived product, known in the art is a polymer product obtained by reacting carbon monoxide, an olefinically unsaturated compound having 20 carbon atoms or less, and a polyol polymer or an unsaturated rubber under a high temperature and a high pressure. However, the polymer product has drawbacks of being a mixture with ECO, being completely insoluble in solvents, or the like. In particular, the structure of a reaction product of carbon monoxide, the olefinically unsaturated compound and a polyol polymer is totally unknown (for example, see Patent Document 4).

Therefore, development of an aliphatic ketone polymer has been demanded such that the polymer exhibits melt formability for industrial use, less degradation of properties during forming, and high mechanical properties after being formed into an article.

Patent Document 1: EP Patent No. 0121965
Patent Document 2: JP-A-62-53332
Patent Document 3: U.S. Patent No. 5066701
Patent Document 4: Japanese Patent No. 2752167

DISCLOSURE OF THE INVENTION

Problem to be Solved by the Invention

An object of the present invention is to chemically improve properties of an aliphatic polyketone comprising an ethylene unit and/or an ethyleneically unsaturated compound unit and a carbon monoxide unit as constituents, and to provide an aliphatic ketone polymer that well balances melt formability for industrial use and high mechanical properties, and a shaped article made of the aliphatic ketone polymer.

Means for Solving the Problem

The present invention has been accomplished based on a surprising fact that an aliphatic ketone polymer comprising (i) an ethylene unit and/or an ethyleneically unsaturated compound unit, (ii) a carbon monoxide unit, and (iii) a polyalkylene glycol unit, or (iv) a hydrogenated conjugated diene polymer unit comprising an alcohol group exhibits melt formability for industrial use and high resin properties.

That is to say, the present invention relates to an aliphatic ketone polymer comprising a unit represented by the following formula (1), and a unit represented by the following formula (2), and a unit represented by the following formula (3) or (4), and a shaped article made of the aliphatic ketone polymer.

[Formula 3]

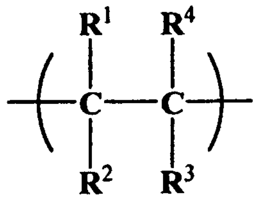

· · · (1)

[Formula 4]

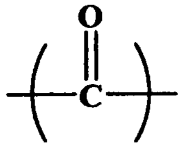

. . . (2)

[Formula 5]

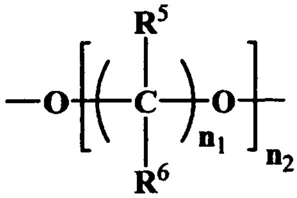

. . . (3)

[Formula 6]

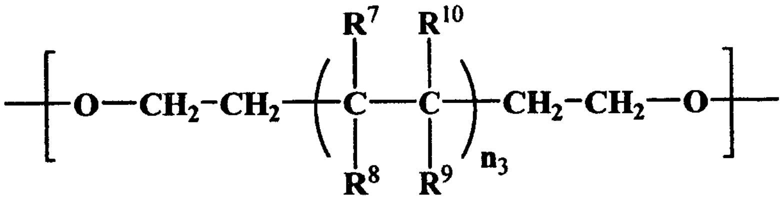

. . . (4)

wherein, $R^1$ to $R^{10}$ may be the same or different and are selected from the group consisting of hydrogen; a hydrocarbon group having 1 to 20 carbon atoms that may be substituted with a halogen(s); a halogen; a hydroxy group; an ester group; an alkoxy group; a cyano group; an imide group; a silyl group; and a hydrocarbon group having 1 to 20 carbon atoms substituted with a functional group selected from a hydroxy group, an ester group, an alkoxy group, a cyano group, an imide group, and a silyl group; $R^2$ and $R^3$, or $R^8$ and $R^9$ may be linked to form a monocycle or a polycycle; and $n_1$, $n_2$, and $n_3$ satisfy $1 \leq n_1 \leq 20$, $1 \leq n_2 \leq 35{,}000$, and $1 \leq n_3 \leq 40{,}000$. Advantages of the Invention

The present invention provides an aliphatic ketone polymer that exhibits melt formability for industrial use and high mechanical properties, and a shaped article made of the aliphatic ketone polymer.

BRIEF DESCRIPTION OF THE DRAWINGS

Fig. 1 shows a $^1$H-NMR spectrum of an aliphatic ketone polymer (Example 1); and
Fig. 2 shows a $^1$H-NMR spectrum of an aliphatic ketone polymer (Example 8).

BEST MODE FOR CARRYING OUT THE INVENTION

The aliphatic ketone polymer according to the present invention comprises an ethylene unit and/or an ethylenically unsaturated compound unit represented by the following formula (1), and a carbon monoxide unit represented by the formula (2), and a polyalkylene glycol unit represented by the formula (3) or a hydrogenated conjugated diene polymer unit comprising an alcohol group represented by the formula (4).

[Formula 7]

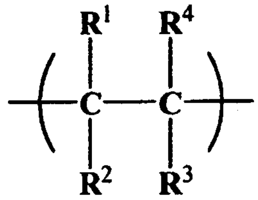

. . . (1)

[Formula 8]

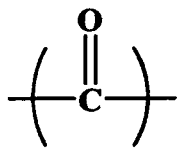

. . . (2)

[Formula 9]

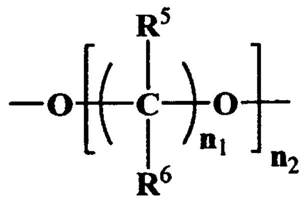

. . . (3)

[Formula 10]

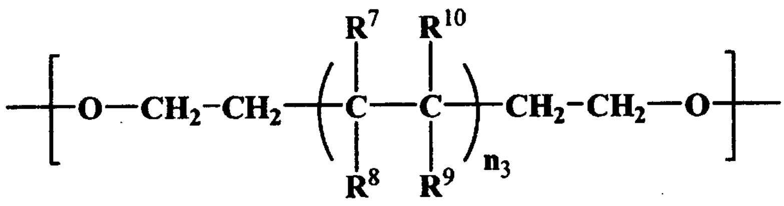

. . . (4)

wherein, $R^1$ to $R^{10}$ may be the same or different and are selected from the group consisting of hydrogen; a hydrocarbon group having 1 to 20 carbon atoms that may be substituted with halogen; halogen; a hydroxy group; an ester group; an alkoxy group; a cyano group; an imide group; a silyl group; and a hydrocarbon group having 1 to 20 carbon atoms substituted with a functional group selected from a hydroxy group, an ester group, an alkoxy group, a cyano group, an imide group, and a silyl group; $R^2$ and $R^3$, or $R^8$ and $R^9$ may be linked to form a monocycle or a polycycle; and $n_1$, $n_2$, and $n_3$ satisfy $1 \leq n_1 \leq 20$, $1 \leq n_2 \leq 35,000$, and $1 \leq n_3 \leq 40,000$.

The ethyleneically unsaturated compound that can be used in the present invention is a compound having a

carbon-carbon double bond. Examples of the compound may include: α-olefin having 3 to 20 carbon atoms such as propylene, 1-butene, 1-pentene, 1-hexene, 1-heptene, 1-octene, or 1-decene; an alkenyl aromatic compound such as styrene or α-methyl styrene; cyclic olefin such as cyclopentene, norbornene, 5-methyl norbornene, tetracyclododecene, tricyclodecene, pentacyclodecene, or pentacyclohexadecene; vinyl halide such as vinyl chloride; acrylate such as ethyl acrylate or methyl methacrylate; and vinyl acetate. These ethyleneically unsaturated compounds may be used alone or in combination of two or more of the foregoing.

Among the ethyleneically unsaturated compounds, the $C_{3-20}$ α-olefin is preferable. In particular, propylene is preferable because an aliphatic ketone polymer to be obtained has excellent mechanical properties.

The polyalkylene glycol that can be used in the present invention has a structure in which alkylene structures are coupled via ether bonds, and generally represented by HO-(R-O)n-H where R represents alkylene. For example, the polyalkylene glycol may comprise an alkylene chain such as ethylene, propylene, isopropylene, butylene, isobutylene, pentylene, isopentylene, or neopentylene. Specifically, the polyalkylene glycol may be polyethylene glycol, polytrimethylene glycol, polytetramethylene glycol, or the like. These polyalkylene glycols may be used alone or in combination of two or more of them.

Among the polyalkylene glycols, polyethylene glycol is preferable for separation film applications in view of separability. Polytetramethylene glycol is preferable for elastomer applications in view of elastic properties.

The molecular chain ends of the polyalkylene glycol are preferably hydroxy groups for the purpose of reacting the polyalkylene glycol with polyketone. However, one of the molecular chain ends may be blocked with an alkoxy group such as a methoxy group or an ethoxy group; a phenoxy group; an alkyl group such as a methyl group or an ethyl group; a phenyl group, another organic group or the like.

The molecular weight of the polyalkylene glycol is not particularly restricted. However, in view of separability, strength, and forming (film forming), the polyalkylene glycol preferably has a number average molecular weight determined by GPC measurement in the range of 200 to 100,000, more preferably 200 to 20,000, and most preferably 400 to 10,000. The polyalkylene glycol preferably has a molecular weight distribution (weight average molecular weight/number average molecular weight) in the range of 1 to 10 by the same reason, and more preferably 1 to 5.

When aliphatic polyketones represented by ECO are subjected to wet forming, shaped articles having fine pores on the order of from several nanometers to 100 micrometers are formed. Therefore, JP-A-2002-348401 and the like disclose that aliphatic polyketones are suitably used as a separation film material for hemodialysis, electrodialysis, reverse osmosis, ultrafiltration, gas separation or the like by forming aliphatic polyketones into flat membranes, hollow fiber membranes or the like.

By the way, a shaped article having fine pores can also be manufactured by a melt forming method. Applicable methods are a method in which a shaped article which is subjected to film formation by melting or to melt spinning is drawn; a method in which mixing particulates are mixed before melting, subsequently melt forming is conducted, and particulates are removed in later steps; or the like.

Aliphatic polyketones have hypotoxicity, high chemical stability, and the like. Therefore, aliphatic polyketones are thought to be promising for medical applications represented by hemodialysis.

However, when a polyketone separation membrane consisting of one or more ethyleneically unsaturated compounds and carbon monoxide is used for separating biogenic substances, sufficient separation is hardly achieved because the polymer has a low polarity. For the purpose of enhancing the polarity, a method of reducing a part of carbonyl groups into hydroxy groups is conceivable. However, use of this method brings too high polarity, thereby also degrading separation efficiency. In addition, the polyketone has drawbacks of complex manufacturing processes and high manufacturing cost because a process of reducing manufactured polyketone is required or the like.

The aliphatic ketone polymer comprising polyalkylene glycol according to the present invention can be manufactured by one time copolymerization. In addition, a polyalkylene glycol unit is bonded to an end of a polyketone chain as a block of a block copolymer, and thus polyalkylene glycol is not separated or leached during wet forming or melt forming. The polymer well balances hydrophilicity and hydrophobicity, thereby exhibiting appropriate surface polarity. Therefore, the polymer is useful for various separation membrane applications, in particular useful as a material for separation membranes of biogenic substances typically used for hemodialysis.

The hydrogenated conjugated diene polymer comprising an alcohol group that can be used in the present invention is a polymer obtained by polymerizing conjugated diene monomers. The polymer has at least one or more -OH groups at the end of the polymer chain. The polymer is further hydrogenated. A conjugated diene constituting the conjugated diene polymer comprising an -OH group at the end of the polymer is not particularly restricted. Examples of the conjugated diene may include conjugated diene monomers such as 1,3-butadiene, isoprene, 1,3-cyclohexadiene, or 1,3-cyclopentadiene. These conjugated diene monomers may be used alone or in combination of two or more of them. Among the conjugated diene monomers, 1,3-butadiene and isoprene are preferable and particularly preferable is 1,3-butadiene.

The molecular weight of the hydrogenated conjugated diene polymer comprising an alcohol group is not particularly restricted. However, in view of mechanical properties of an aliphatic ketone polymer to be obtained, the hydrogenated

conjugated diene polymer preferably has a number average molecular weight determined by GPC measurement in the range of 200 to 100,000, more preferably 200 to 10,000, and most preferably 400 to 5,000. The hydrogenated conjugated diene polymer preferably has a molecular weight distribution (weight average molecular weight/number average molecular weight) in the range of 1 to 10 by the same reason, and more preferably 1 to 5.

The aliphatic ketone polymer comprising the hydrogenated conjugated diene polymer comprising an alcohol group according to the present invention is useful, for example, as an elastomer material, a forming material, a functional material for adhesives, sealers, industrial fibers, fabrics, knit fabrics, nonwoven fabrics or the like. The aliphatic ketone polymer is also useful for separation membrane applications.

Such products can be formed by melt forming as well as wet forming or dry forming.

The content of the unit derived from polyalkylene glycol and the unit derived from hydrogenated conjugated diene polymer comprising an alcohol group in the aliphatic ketone polymer according to the present invention is selected properly depending on application object of the aliphatic ketone polymer. The content is 0.01 to 99.9% by weight, more preferably 0.01 to 50.0% by weight, and still more preferably 0.01 to 15% by weight.

As for the bonding type of each comonomer, most preferable is to form a block copolymer consisting of a polyketone unit (A) in which ethylene and/or an ethyleneically unsaturated compound and carbon monoxide are copolymerized alternately altogether substantially and a unit (B) of polyalkylene glycol or hydrogenated conjugated diene polymer comprising an alcohol group.

The block copolymer may be any kinds of forms, for example a diblock copolymer or a triblock copolymer such as A-B, A-B-A, B-A-B, A-B-A-B, A-B-....-A, B-A-....-A, A-B-....-B, or B-A-....-B. A is preferably poly (1-oxotrimethylene).

The aliphatic ketone polymer according to the present invention preferably has a number average molecular weight in the range of 200 to 1,100,000 determined by GPC measurement, and a number average molecular weight in the range of 200 to 150,000 derived from $^1$H-NMR. The polymer preferably has a number average molecular weight in the range of 20,000 to 600,000 determined by GPC measurement, and a number average molecular weight in the range of 10,000 to 100,000 derived from $^1$H-NMR in view of strength or processability in the case of processing the polymer into a separation membrane, a shaped article or the like. In particular, when the polymer is processed into a membrane, the polymer preferably has a number average molecular weight in the range of 80,000 to 600,000 determined by GPC measurement, and a number average molecular weight in the range of 40,000 to 100,000 derived from $^1$H-NMR. When the polymer is processed into a shaped article, the polymer preferably has a number average molecular weight in the range of 20,000 to 300,000 determined by GPC measurement, and a number average molecular weight in the range of 10,000 to 40,000 derived from $^1$H-NMR.

The aliphatic ketone polymer according to the present invention may contain various additives when necessary. The additives may include: a thermal stabilizer, an antifoaming agent, an orthochromatic agent, a fire retardant additive, an antioxidant, an ultraviolet absorbing agent, an infrared ray absorbing agent, a nucleator, and a surfactant.

A preferred example of a method of manufacturing the aliphatic ketone polymer according to the present invention is to polymerize ethylene and/or an ethyleneically unsaturated compound, carbon monoxide, and polyalkylene glycol, or a hydrogenated conjugated diene polymer comprising an alcohol group in a reaction vessel such as an autoclave. As for materials to be used for manufacturing the aliphatic ketone polymer according to the present invention, the ethylene and/or the ethyleneically unsaturated compound, carbon monoxide, and the polyalkylene glycol, or the hydrogenated conjugated diene polymer comprising an alcohol group can be used. As for the ratio of ethylene and/or an ethyleneically unsaturated compound and carbon monoxide in a reaction vessel, (ethylene and/or an ethyleneically unsaturated compound/carbon monoxide) is preferably 10/1 to 1/10 in a molar ratio, and more preferably 5/1 to 1/5. The amount of polyalkylene glycol and a hydrogenated conjugated diene polymer comprising an alcohol group to be used can be determined arbitrarily depending on a ratio to be contained.

In conducting the polymerization reaction, a solvent may be used. A protic solvent may include water, a compound having 1 to 10 carbon atoms and a hydroxyl group or the like. Specifically, examples of the protic solvent may include: alcohols such as methanol, ethanol, 1-propanol, 2-propanol, butanol, hexafluoroisopropanol, benzyl alcohol, or ethylene glycol; and phenols such as m-creosol.

Examples of an aprotic solvent may include: hydrocarbons having 3 to 20 carbon atoms; ketones such as acetone or methyl ethyl ketone; ethers such as diethyl ether, tetrahydrofuran, or diglyme; nitriles such as acetonitrile; esters such as acetic acid, methyl acetate, or ethyl acetate; halogenated hydrocarbon such as chloroform, methylene chloride, or 1,1,2,2-tetrachloroethane; toluene, DMF, DMSO, γ-butyrolactone, or N-methylpyrrolidone.

In view of reactivity, a protic solvent is preferably used. That is, water, methanol, ethanol, or 2-propanol is preferably used. On the other hand, in view of capable of providing an aliphatic ketone polymer with high molecular weight, an aprotic solvent is preferably used. That is, hexane, acetone or methyl ethyl ketone is preferably used. Two or more solvents selected from the above solvents may be used in combination.

In the reaction, a method of adding ethylene and/or an ethyleneically unsaturated compound and carbon monoxide is not particularly restricted. Ethylene and/or an ethyleneically unsaturated compound and carbon monoxide may be mixed and then added, or may be added via separate supply lines. Polyalkylene glycol and a hydrogenated

conjugated diene polymer comprising an alcohol group to be used as materials may be added in any reaction stage, but addition at the beginning of the reaction is preferable.
Alternatively, usable is a method of continuously adding a required amount to the reaction system as the required amount is consumed with proceeding of a copolymerization reaction.

When the aliphatic ketone polymer according to the present invention is manufactured, an organometallic complex catalyst or a free-radical initiator is preferably used as a catalyst to conduct a polymerization reaction.
The organometallic complex catalyst comprises (a) a transition-metal compound of Groups 9, 10 and 11 of the periodic table (in Revised Edition of IUPAC Nomenclature of Inorganic Chemistry in 1989) and (b) a ligand having an atom of Group 15. In addition, besides (a) a transition-metal compound of Groups 9, 10 and 11 and (b) a ligand having an atom of Group 15, (c) an acid anion may be added as a tertiary catalytic component.

The transition-metal compound of Group 9 as the component (a) may include a complex of cobalt or ruthenium, such as carboxylate, phosphate, carbamate, and sulfonate. Examples thereof may include: cobalt acetate, cobalt acetyl acetate, ruthenium acetate, ruthenium trifluoroacetate, ruthenium acetyl acetate, and ruthenium trifluoromethanesulfonate.
The transition-metal compound of Group 10 may include a complex, carboxylate, phosphate, carbamate, and sulfonate of nickel, palladium or platinum. Examples thereof may include: nickel acetate, nickel chloride, nickel acetyl acetonate, palladium acetate, palladium trifluoroacetate, palladium acetyl acetonate, palladium chloride, bis(N,N-diethylcarbamate) bis(diethylamino)palladium, palladium sulfate, platinum chloride, and platinum acetyl acetonate.
The transition-metal compound of Group 11 may include a complex, carboxylate, phosphate, carbamate, and sulfonate of copper or silver. Examples thereof may include: copper acetate, silver trifluoroacetate, copper acetyl acetonate, silver acetate, silver trifluoroacetate, silver acetyl acetonate, and silver trifluoromethanesulfonate.
Among the above transition-metal compounds, transition-metal compounds (a) inexpensive and economically preferable are the nickel compound and the copper compound. Transition-metal compounds (a) preferable in terms of the yield and the molecular weight of an aliphatic ketone polymer are the palladium compounds. The transition-metal compounds may be used alone or in combination of two or more of them.

A ligand is, as defined in Encyclopedia Chimica, KYORITSU SHUPPAN CO., LTD, 1974, reduced-size edition, 16th issue, Vol. 7, p. 4, an atomic group containing atoms directly bonded to the central atom in a complex. In the present invention, it is necessary to use a ligand having an atom of Group 15 of the periodic table.
Examples of the ligand may include: a monoligand of nitrogen such as pyridine; a monoligand of phosphorus such as triphenyl phosphine or trinaphthyl phosphine; a monoligand of arsenic such as triphenyl arsine; a monoligand of antimony such as triphenyl antimony; a diligand of nitrogen such as 2,2'-bipyridyl, 4,4'-dimethyl-2,2'-bipyridyl, 2,2'-bi-4-picoline, or 2,2'-biquinoline; and a diligand of phosphorus such as 1,2-bis(diphenylphosphino)ethane, 1,3-bis(diphenylphosphino) propane, 1,4-bis(diphenylphosphino)butane, 1,3-bis{di(2-methyl)phosphino}propane, 1,3-bis{di(2-isopropyl)phosphino} propane, 1,3-bis{di(2-methoxyphenyl)phosphino}propane, 1,3-bis(di(2-methoxy-4-sodium sulfonate-phenyl)phosphino} propane, 1,2-bis(diphenylphosphino)cyclohexane, 1,2-bis(diphenylphosphino)benzene, 1,2-bis{ (diphenylphosphino) methyl}benzene, 1,2-bis[{di(2-methoxyphenyl)phosphino}methyl]benzene, 1,2-bis[{di(2-methoxy-4-sodium sulfonate-phenyl)phosphino}methyl]benzene, 1,1'-bis(diphenylphosphino)ferrocene, 2-hydroxy-1,3-bis{di(2-methoxyphenyl) phosphino}propane, or 2,2-dimethyl-1,3-bis{di(2-methoxyphenyl)phosphino}propane. The ligands mentioned above may be used alone or in combination of two or more of them.

Among the ligands mentioned above, a preferred ligand is a diligand of phosphorus.
In particular, preferred diligands of phosphorus in terms of copolymerizability and the yield of an aliphatic ketone polymer are 1,3-bis(diphenylphosphino)propane, 1,3-bis{di(2-methoxyphenyl)phosphino}propane, and 1,2-bis[{di(2-methoxyphenyl)phosphino}methyl]benzene. Preferred diligands of phosphorus in terms of the molecular weight of an aliphatic ketone polymer are 2-hydroxy-1,3-bis{di(2-methoxyphenyl)phosphino}propane, and 2,2-dimethyl-1,3-bis{di(2-methoxyphenyl)phosphino}propane.
In terms of being in no need of organic solvents and being safe, water-soluble ligands of 1,3-bis{di(2-methoxy-4-sodium sulfonate-phenyl)phosphino}propane, and 1,2-bis[(di(2-methoxy-4-sodium sulfonate-phenyl)phosphino}methyl]benzene are preferable. In terms of being synthesized easily and available large amounts, an economically preferable ligand is 1,3-bis(diphenylphosphino)propane, and 1,4-bis(diphenylphosphino)butane.

Examples of (c) an acid anion that can be added as a catalyst to the transition-metal compound and the ligand having an atom of Group 15 of the periodic table may include: an anion of an organic acid having a pKa not greater than 4 such as trifluoroacetic acid, methanesulfonic acid, trifluoromethanesulfonic acid, or p-toluenesulfonic acid; an anion of an inorganic acid having a pKa not greater than 4 such as perchloric acid, sulfuric acid, nitric acid, phosphoric acid, heteropoly acid, tetrafluoroboric acid, hexafluorophosphoric acid, or fluorosilicic acid; and an anion of boron compounds such as trispentafluorophenyl boron, trisphenylcarbenium tetrakis(pentafluorophenyl)borate, or N,N-dimethylanilium tetrakis(pentafluorophenyl)borate. The anions mentioned above may be used alone or in combination of two or more of them. Among the above mentioned anions, preferred anions are, in view of both the yield and the molecular weight of the polymer, sulfuric acid, methanesulfonic acid, and trifluoromethanesulfonic acid. pKa is a value defined by pKa=-

$log_{10}Ka$ where the dissociation constant of an acid is defined as Ka. The smaller the value is, the stronger the acid is.

Preferred amounts of (a) transition-metal compound to be used as a catalyst vary depending on the types of ethylene and/or an ethyleneically unsaturated compound to be selected and other polymerization conditions. Therefore, the range of the preferred amounts of (a) transition-metal compound to be used cannot be defined uniquely. However, preferred amounts are 0.01 to 10000 micromoles, more preferably 0.1 to 1000 micromoles per 1 liter volume of a reaction zone. The volume of a reaction zone denotes the volume of a liquid phase in a reaction vessel.

The amounts of (b) ligand are preferably 0.1 to 10 moles, more preferably 1 to 5 moles per mole of the transition-metal compound.

The amounts of (c) acid anion are preferably 0.1 to 1000 moles, more preferably 1 to 100 moles, and most preferably 3 to 50, per mole of the transition-metal compound.

The catalyst is generated by mixing the transition-metal compound, and the ligand having an atom of Group 15 element of the periodic table, and preferably further the acid anion. As for usage of the catalytic composition, it is preferable that the catalytic composition of a mixture of various components is prepared and then the catalytic composition is added to a reaction vessel. When the catalytic composition is prepared, the transition-metal compound and the ligand are preferably mixed first, and then an acid is mixed therewith. A solvent used for preparing the catalytic composition may be a protic organic solvent such as alcohol, or an aprotic organic solvent such as acetone or methyl ethyl ketone. An oxidizing agent such as benzoquinone or naphthoquinone may be added to the catalyst made from the three components of the transition-metal compound, the ligand having an atom of Group 15 element of the periodic table, and the acid anion. The additional amount of the quinones is preferably 1 to 1000 moles, and more preferably 10 to 200 moles per mole of the transition-metal compound. The quinones may be added by a method of adding the quinones to the catalytic composition and then adding the composition to a reaction vessel, or by a method of adding the quinones to a polymerization solvent. When necessary, the quinones may be added continuously to a reaction vessel during the reaction.

On the other hand, when a free-radical initiator is used as a catalyst, a peroxydicarbonate initiator, a peroxyester initiator, a diacylperoxide initiator, or an azo initiator may be used.

Each of the initiator types mentioned above includes a monoradical initiator comprising one -O-O-bond or -N=N- bond in a molecule; a biradical initiator comprising two -O-O- bonds or -N=N- bonds in a molecule; and a polymeric initiator comprising three or more -O-O- bonds or -N=N- bonds in a molecule.

Examples of the monoradical initiator may include: di-2-ethylhexylperoxydicarbonate, di-n-propylperoxydicarbonate, bis-(4-t-butylcyclohexyl)peroxydicarbonate, t-butylperoxyisobutyrate, t-butylperoxypivalate, t-hexylperoxyneohexanoate, isobutylperoxide, octanoylperoxide, decanoylperoxide, laurylperoxide, 2,2'-azobis(2,4-dimethylvaleronitrile), 2,2'-azobisisobutyronitrile, 2,2'-azobis(2-cyclopropylpropionitrile), and 2,2'-azobis(4-methoxy-2,4'-dimethylvaleronitrile).

Examples of the biradical initiator may include: ($\alpha,\alpha'$-bis-neodecanoylperoxy)diisopropyl benzene, 2,5-dimetyl-2,5-bis(2-ethylhexylperoxy)hexane, and 2,5-dimetyl-2,5-bis(neodecanoylperoxy)hexane.

Examples of the polymeric initiator may include polyperoxydicarbonate.

When the free-radical initiator is used as a catalyst, one or more diluents that can be used may include: hydrocarbon such as cyclohexane, hexane, pentane, octane, or benzene; carbonates such as dimethyl carbonate, diethyl carbonate, dipropyl carbonate, or dibutyl carbonate; cyclic ethers such as tetrahydrofuran, tetrahydropyran, 1,4-dioxane, 1,3-dioxane, or 1,3-dioxorane; and ethers such as diethyl ether, dipropyl ether, or dibutyl ether. Among the above polymerization diluents, preferred are dimethyl carbonate, diethyl carbonate, and 1,4-dioxane.

A preferred reaction temperature is 50 to 300°C, more preferably 70 to 200°C, and most preferably 50 to 120°C. When the polymerization temperature is less than 50°C, the reaction with a hydrogenated conjugated diene polymer comprising an alcohol group hardly occurs. When the polymerization temperature is greater than 300°C, reactivity increases and high productivity is achieved. However, a polyketone to be obtained has an extremely low molecular weight, and thus such a polyketone may not exhibit sufficient mechanical and thermal properties.

A preferred reaction period is 1 to 24 hours, more preferably 1.5 to 10 hours and most preferably 2 to 6 hours. When the reaction period is less than an hour, a catalyst remains too much and an additional process for removing the catalyst is required. On the other hand, when the reaction period is greater than 24 hours, an aliphatic ketone polymer to be obtained can have a large molecular weight distribution, and thus such a polymer may not exhibit excellent mechanical and thermal properties.

Thus obtained aliphatic ketone polymer according to the present invention can be formed by melt forming or wet forming known in the art. The polymer is applicable to various fields as shaped articles. It should be noted that the shaped articles in the present invention denote useful artificial products formed by pressure, heat, solvents, or the like.

## EXAMPLES

Hereinafter, the present invention is described in detail with referring to Examples.

Measurement methods used in the present invention for obtaining measured values are as follows.

(1) Repeating units of aliphatic ketone polymer

By $^1$H-NMR measurement, the presence and existing amounts of units (a), (b), and (c) are identified. The unit (a) is composed of ethylene and/or an ethyleneically unsaturated compound and carbon monoxide. The unit (b) is derived from polyalkylene glycol. The unit (c) is derived from hydrogenated conjugated diene polymer comprising an alcohol group. An integrated value is used to calculate the NMR derived number average molecular weight of an aliphatic ketone polymer (an integrated value of signals in which a chemical shift is in ~1.1 ppm is defined as 1). Furthermore, the content of polyalkylene glycol and the content of a hydrogenated conjugated diene polymer comprising an alcohol group are calculated by the following formulae.

Formula 1: the content of polyalkylene glycol (wt%) =

{the number average molecular weight of b/(the total of the number average molecular weights of a and b)} × 100

Formula 2: the content of a hydrogenated conjugated diene polymer (wt%) =

{the number average molecular weight of c/(the total of the number average molecular weights of a and c)} × 100

Measuring equipment: JEOL-α-400 manufactured by JEOL Ltd.
Solvent: 12 wt/v% $CDCl_3$ solution in HFIP

(2) Molecular weight of aliphatic ketone polymer

The GPC derived molecular weight is determined by GPC measurement under the following conditions.
Measuring equipment: HLC-8220GPC manufactured by Tosoh Corporation
Precolumn: Shodex HFIP-G (registered trademark) manufactured by SHOWA DENKO K. K.
Column: Shodex HFIP-606M (registered trademark) × 3 manufactured by SHOWA DENKO K. K.
Column temperature: 40°C
Developing solvent: 0.01 M $CF_3COONa$ solution in HFIP
Sample concentration: 0.01 wt/v%
Conversion of molecular weight: a calibration curve is made by using the relationship between the molecular weight of standard PMMA and elution time as fifth regression curve, and calculation is conducted base on the calibration curve.

(3) Melting point and degree of crystallinity of aliphatic ketone polymer

Measurement is conducted under the following conditions. In an observed endotherm/exotherm curve, a peaktop point of a maximum endotherm peak observed in the range of 200°C to 280°C is defined as a melting point.
Measuring equipment: differential scanning calorimetry Pyris1 (registered trademark) manufactured by PerkinElmer, Inc.
Atmosphere: under nitrogen flow (200 ml/minute)
Temperature increasing rate: 20°C/minute
Temperature range: 25°C to 260°C

Sample: 5 mg

Degree of crystallinity is calculated by using the following formula where heat quantity $\Delta H$ (J/g) is calculated from the area of a maximum thermal peak observed in the range of 200°C to 300°C in the endotherm/exotherm curve.

$$\text{Degree of crystallinity} = \Delta H/226 \times 100\ (\%)$$

(1) Aliphatic ketone polymer composed of ethylene/carbon monoxide/polyalkylene glycol

Reference Example 1

Preparation of $[Pd((Ph)_2P(CH_2)_3P(Ph)_2)](CH_3COO)_2$ (hereafter referred to as metal complex-1)

Palladium acetate (7.0 mg, 28.6 μmol) was dissolved in 10 ml of acetone (solution A). 1,3-bis(diphenylphosphino)propane (7.8 mg, 18.9 mmol) was dissolved in 9 ml of acetone (solution B). 5 ml of the solution A was added slowly dropwise to the solution B. Then this solution was stirred for an hour to obtain 1 μmol/ml metal complex-1 solution in acetone.

Reference Example 2

Polyalkylene glycol

Polyethylene glycols (grade name: PEG 1000 and PEG 2000) manufactured by Wako Pure Chemical Industries, Ltd. (hereafter, referred to as PEG component altogether) were purchased and used without purification. Each of the polyethylene glycols had two end alcohol groups, and the number average molecular weights were about 1000 and about 2000, respectively.

Example 1

6 g of PEG 1000 manufactured by Wako Pure Chemical Industries, Ltd. and 30 ml of acetone were added to a 100 ml autoclave. Then 1 ml (1 μmol) of the metal complex-1 solution in acetone was added thereto. Subsequently, 12 μL (6 μmol) of a 0.5 mol/L aqueous sulfuric acid and 4.3 mg (40 μmol) of benzoquinone were added thereto. After the autoclave was sealed, nitrogen substitution was conducted three times at 25°C and 8.0 MPa. The temperature was increased with stirring the contents, and the inside temperature was elevated to 100°C. The autoclave was pressurized with a mixed gas containing the same moles of carbon monoxide and ethylene up to 8.0 MPa and polymerization was initiated. Polymerization was conducted for 3 hours while the inside temperature and the inside pressure of the autoclave were maintained constant by successively replenishing the mixed gas containing the same moles of ethylene and carbon monoxide. After the polymerization was complete, the autoclave was cooled rapidly and the inside gas was purged and substituted with nitrogen to quench the polymerization. After the autoclave was cooled to room temperature, the autoclave was released and the contents were taken out. The reaction solution was filtered, washed with acetone three times, and dried under a reduced pressure to obtain 2.43 g of an aliphatic ketone polymer. The copolymerization activity of the polymer was 7.64 kg/g-Pd/h. The polymer was assessed to have a $^1H$-NMR derived molecular weight (Mn) of $1.5 \times 10^4$, and a 6.3 wt% content of the PEG component. Melting point (Tm) = 250°C. Degree of crystallinity = 61%.

$^1H$-NMR: 3.73 ($-C(=O)-O-CH_2-/-CH_2-O-$ (PEG moiety)), 2.80 ($-CH_2-CH_2-C(=O)-$), ~1.08 ($-CH_2-CH_3$)

The $^1H$-NMR spectrum of the polymer is shown in Fig. 1.

Example 2

The same procedures were conducted as with Example 1 except that PEG 2000 manufactured by Wako Pure Chemical Industries, Ltd. was used to obtain 2.27 g of an aliphatic ketone polymer.

The copolymerization activity of the polymer was 7.14 kg/g-Pd/h. The polymer was assessed to have a $^1H$-NMR derived molecular weight (Mn), of $3.4 \times 10^4$; a GPC derived molecular weight (Mn) of $7.1 \times 10^4$, Mw/Mn = 3.27; and a 5.5 wt% content of the PEG component. Melting point (Tm) = 251°C. Degree of crystallinity = 60%.

Example 3

The same procedures were conducted as with Example 1 except that the autoclave was pressurized with a

mixed gas containing the same moles of carbon monoxide and ethylene up to 12.0 MPa to obtain 2.96 g of an aliphatic ketone polymer. The copolymerization activity of the polymer was 9.31 kg/g-Pd/h. The polymer was assessed to have a $^1$H-NMR derived molecular weight (Mn) of 2.6 $\times$ $10^4$ ; a GPC derived molecular weight (Mn) of 6.2 $\times$ $10^4$, Mw/Mn = 3.34; and a 3.7 wt% content of the PEG component. Melting point (Tm) = 254°C. Degree of crystallinity = 65%.

Example 4

The same procedures were conducted as with Example 1 except that the autoclave was pressurized with a mixed gas containing the same moles of carbon monoxide and ethylene up to 16.0 MPa to obtain 4.78 g of an aliphatic ketone polymer. The copolymerization activity of the polymer was 15.03 kg/g-Pd/h. The polymer was assessed to have a $^1$H-NMR derived molecular weight (Mn) of 10.3 $\times$ $10^4$; a GPC derived molecular weight (Mn) of 11.8 $\times$ $10^4$, Mw/Mn = 3.04; and a 1.0 wt% content of the PEG component. Melting point (Tm)= 257°C. Degree of crystallinity = 65%.

Example 5

The same procedures were conducted as with Example 4 except that PEG 2000 manufactured by Wako Pure Chemical Industries, Ltd. was used to obtain 4.35 g of an aliphatic ketone polymer.
The copolymerization activity of the polymer was 13.68 kg/g-Pd/h. The polymer was assessed to have a $^1$H-NMR derived molecular weight (Mn) of 10.4 $\times$ $10^4$; a GPC derived molecular weight (Mn) of 11.5 $\times$ $10^4$, Mw/Mn = 2.92; and a 1.89 wt% content of the PEG component. Melting point (Tm) = 257°C. Degree of crystallinity = 65%.

Example 6

The same procedures were conducted as with Example 1 except that the reaction temperature was 105°C and PEG 2000 manufactured by Wako Pure Chemical Industries, Ltd. was used to obtain 2.73 g of an aliphatic ketone polymer. The copolymerization activity of the polymer was 8.58 kg/g-Pd/h. The polymer was assessed to have a $^1$H-NMR derived molecular weight (Mn) of 2.9 $\times$ $10^4$; a GPC derived molecular weight (Mn) of 7.1 $\times$ $10^4$, Mw/Mn = 2.95; and a 6.49 wt% content of the PEG component. Melting point (Tm) = 257°C. Degree of crystallinity = 60%.

Example 7

A 10 L reaction vessel was used. 1.3 kg of PEG 1000 manufactured by Wako Pure Chemical Industries, Ltd. and 6.5 L of acetone were added thereto. After the autoclave was sealed, nitrogen substitution was conducted three times at 25°C and 8.0 MPa. The temperature was increased with stirring the contents, and the inside temperature was elevated to 95°C. The autoclave was pressurized with a mixed gas containing the same moles of carbon monoxide and ethylene up to 8.0 MPa. Then 0.5 L of an acetone solution containing palladium acetate (22.45 mg, 100 μmol), 1,3-bis (diphenylphosphino)propane (49.49 mg, 120 μmol), 1.2 mL (600 μmol) of a 0.5 mol/L aqueous sulfuric acid and 0.43 g (4 mmol) of benzoquinone was fed thereto by using a pump, and then polymerization was initiated. Polymerization was conducted for 1.5 hours while the inside temperature and the inside pressure of the autoclave were maintained constant by successively replenishing the mixed gas containing the same moles of ethylene and carbon monoxide. After the polymerization was complete, the autoclave was cooled rapidly and the inside gas was purged and substituted with nitrogen to quench the polymerization. After the autoclave was cooled to room temperature, the autoclave was released and the contents were taken out. The reaction solution was filtered, washed with acetone three times, and dried under a reduced pressure to obtain 243 g of an aliphatic ketone polymer. The copolymerization activity of the polymer was 15.2 kg/g-Pd/h. The polymer was assessed to have a $^1$H-NMR derived molecular weight (Mn) of 2.0 $\times$ $10^4$; and a 3.4 wt% content of the PEG component. Melting point (Tm) = 254°C. Degree of crystallinity = 60%.
(2) Aliphatic ketone polymer consisting of ethylene/carbon monoxide/hydrogenated conjugated diene polymer containing an alcohol group

Reference Example 3

Preparation of $[Pd((Ph)_2P(CH_2)_3P(Ph)_2)(CH_3COO)_2$ (hereafter referred to as metal complex-2)

Palladium acetate (7.0 mg, 28.6 μmol) was dissolved in 10 ml of methyl ethyl ketone (solution A). 1,3-bis (diphenylphosphino)propane (7.8 mg, 18.9 mmol) was dissolved in 9 ml of methyl ethyl ketone (solution B). 5 ml of the solution A was added slowly dropwise to the solution B. Then this solution was stirred for an hour to obtain 1 μmol/ml metal complex-2 solution in acetone.

Reference Example 4

Hydrogenated conjugated diene polymer comprising an alcohol group

Hydrogenated PB resins (grade name: GI-1000, GI-2000 and GI-3000) manufactured by Nippon Soda Co., Ltd. (hereafter, referred to as GI component altogether) were purchased and used without purification. Each of the GI components had two end alcohol groups, and the number average molecular weights were about 1500, about 2100 and about 3000, respectively.

Example 8

6 g of GI-1000 manufactured by Nippon Soda Co., Ltd. and 30 ml of methyl ethyl ketone were added to a 100 ml autoclave. Then 1 ml (1 $\mu$mol) of the metal complex-2 solution in methyl ethyl ketone was added thereto. Subsequently, 12 $\mu$L (6 $\mu$mol) of a 0.5 mol/L aqueous sulfuric acid and 4.3 mg (40 $\mu$mol) of benzoquinone were added thereto. After the autoclave was sealed, nitrogen substitution was conducted three times at 25°C and 8.0 MPa. The temperature was increased with stirring the contents, and the inside temperature was elevated to 90°C. The autoclave was pressurized with a mixed gas containing the same moles of carbon monoxide and ethylene up to 8.0 MPa and polymerization was initiated. Polymerization was conducted for 3 hours while the inside temperature and the inside pressure of the autoclave were maintained constant by successively replenishing the mixed gas containing the same moles of ethylene and carbon monoxide. After the polymerization was complete, the autoclave was cooled rapidly and the inside gas was purged and substituted with nitrogen to quench the polymerization. After the autoclave was cooled to room temperature, the autoclave was released and the contents were taken out. The reaction solution was filtered, washed with toluene once and acetone three times, and dried under a reduced pressure to obtain 1.17 g of an aliphatic ketone polymer. The copolymerization activity of the polymer was 3.68 kg/g-Pd/h. The polymer was assessed to have a $^1$H-NMR derived molecular weight (Mn) of $4.9 \times 10^4$ ; and a 3.0 wt% content of the GI component. Melting point (Tm) = 253°C. Degree of crystallinity = 57%.
$^1$H-NMR : 3.73($-CH_2-O-$), 2.80 ($-CH_2-CH_2-C(=O)-$), ~1.39, ~0.97 ($-CH_2-$, $-CH_2-CH_3$)
The $^1$H-NMR spectrum of the polymer is shown in Fig. 2.

Example 9

The same procedures were conducted as with Example 8 except that GI-2000 manufactured by Nippon Soda Co., Ltd. was used to obtain 1.65 g of an aliphatic ketone polymer.
The copolymerization activity of the polymer was 5.19 kg/g-Pd/h. The polymer was assessed to have a $^1$H-NMR derived molecular weight (Mn) of $3.9 \times 10^4$; a GPC derived molecular weight (Mn) of $16.9 \times 10^4$, Mw/Mn = 2.67; and a 5.1 wt% content of the GI component. Melting point (Tm) = 254°C. Degree of crystallinity = 59%.

Example 10

The same procedures were conducted as with Example 8 except that GI-3000 manufactured by Nippon Soda Co., Ltd. was used to obtain 0.61 g of an aliphatic ketone polymer.
The copolymerization activity of the polymer was 1.92 kg/g-Pd/h. The polymer was assessed to have a $^1$H-NMR derived molecular weight (Mn) of $8.4 \times 10^4$ and a 3.6 wt% content of the GI component. Melting point (Tm) = 252°C. Degree of crystallinity = 51%.

Example 11

The same procedures were conducted as with Example 8 except that the autoclave was pressurized with a mixed gas containing the same moles of carbon monoxide and ethylene up to 16.0 MPa to obtain 1.18 g of an aliphatic ketone polymer. The copolymerization activity of the polymer was 3.71 kg/g-Pd/h. The polymer was assessed to have a $^1$H-NMR derived molecular weight (Mn) of $3.7 \times 10^4$ and a 4.0 wt% content of the GI component. Melting point (Tm) = 252°C.

Example 12

The same procedures were conducted as with Example 11 except that GI-2000 manufactured by Nippon Soda Co., Ltd. was used to obtain 3.65 g of an aliphatic ketone polymer.
The copolymerization activity of the polymer was 11.48 kg/g-Pd/h. The polymer was assessed to have a $^1$H-NMR derived molecular weight (Mn) of $5.1 \times 10^4$; a GPC derived molecular weight (Mn) of $30.9 \times 10^4$, Mw/Mn = 2.46; and a 3.94

wt% content of the GI component. Melting point (Tm) = 254°C. Degree of crystallinity = 64%.

Example 13

The same procedures were conducted as with Example 11 except that GI-3000 manufactured by Nippon Soda Co., Ltd. was used to obtain 4.15 g of an aliphatic ketone polymer.
The copolymerization activity of the polymer was 13.05 kg/g-Pd/h. The polymer was assessed to have a $^1$H-NMR derived molecular weight (Mn) of $6.7 \times 10^4$, and a 4.46 wt% content of the GI component. Melting point (Tm) = 255°C. Degree of crystallinity = 47%.

Example 14

The same procedures were conducted as with Example 8 except that the reaction temperature was 100°C to obtain 1.41 g of an aliphatic ketone polymer. The copolymerization activity of the polymer was 4.43 kg/g-Pd/h. The polymer was assessed to have a $^1$H-NMR derived molecular weight (Mn) of $6.4 \times 10^4$; a GPC derived molecular weight (Mn) of $5.3 \times 10^4$, Mw/Mn = 3.57, and a 2.3 wt% content of the GI component.

Example 15

The same procedures were conducted as with Example 14 except that GI-2000 manufactured by Nippon Soda Co., Ltd. was used to obtain 1.07 g of an aliphatic ketone polymer.
The copolymerization activity of the polymer was 3.37 kg/g-Pd/h. The polymer was assessed to have a $^1$H-NMR derived molecular weight (Mn) of $4.9 \times 10^4$; a GPC derived molecular weight (Mn) of $5.7 \times 10^4$, Mw/Mn = 3.50; and a 4.00 wt% content of the GI component.

Example 16

The same procedures were conducted as with Example 14 except that GI-3000 manufactured by Nippon Soda Co., Ltd. was used to obtain 0.89 g of an aliphatic ketone polymer.
The copolymerization activity of the polymer was 2.81 kg/g-Pd/h. The polymer was assessed to have a $^1$H-NMR derived molecular weight (Mn) of $1.1 \times 10^5$ and a 2.60 wt% content of the GI component.

(3) Aliphatic ketone polymer consisting of ethylene/carbon monoxide

Comparative Example 1

The same procedures were conducted as with Example 8 except that the polymerization was conducted in the absence of the GI component to obtain 0.4 g of an aliphatic ketone polymer. The copolymerization activity of the polymer was 1.26 kg/g-Pd/h.
Analysis of the aliphatic ketone polymer showed that the polymer had a 1-oxotrimethylene structure in which ethylene and carbon monoxide were substantially copolymerized alternately. The polymer had a $^1$H-NMR derived molecular weight (Mn) of $2.3 \times 10^4$. Melting point (Tm) = 251°C. Degree of crystallinity = 63%.

(4) Aliphatic ketone polymer consisting of ethylene/propylene/carbon monoxide

Comparative Example 2

The same procedures were conducted as with Example 8 except that methanol was used instead of acetone and 3 g of liquid propylene was used instead of the GI component to obtain 0.8 g of an aliphatic ketone polymer. Analysis of the aliphatic ketone polymer showed that the polymer was a random terpolymer of carbon monoxide, ethylene and propylene in which ethylene was partially replaced by 6 mole% propylene. The degree of crystallinity of the polymer was 30%.

Comparative Example 3

A 2 L reaction vessel was used. The same procedures were conducted as with Example 7 except that 1.3 L of methanol was used instead of acetone, 127 g of liquid propylene was used instead of the PEG component, and 0.1 L of a methanol solution containing palladium acetate (8.98 mg, 40 μmol), 1,3-bis(diphenylphosphino)propane (19.78

mg, 48 μmol), 0.48 mL (240 μmol) of a 0.5 mol/L aqueous sulfuric acid and 0.18 g (1.6 mmol) of benzoquinone was added to obtain 115 g of an aliphatic ketone polymer. Analysis of the aliphatic ketone polymer showed that the polymer was a random terpolymer of carbon monoxide, ethylene and propylene in which ethylene was partially replaced by 6 mole% propylene. The degree of crystallinity of the polymer was 30%.
The polymerization results are shown in Table 1.

Examples 17 and 18, Comparative Examples 4 and 5

Stability of a polymer while being heated and melted was evaluated in terms of the polymers of Examples 1 and 8 and Comparative Examples 1 and 2. 5 mg of a sample was sealed in an aluminum pan under nitrogen atmosphere. The sample was measured twice sequentially with a differential scanning calorimetry Pyris1 (registered trademark) manufactured by PerkinElmer, Inc. under nitrogen flow of 200 ml/minute, with a temperature increasing rate of 20°C/minute, and under the following temperature profile. In an observed endotherm/exotherm curve, a peaktop point of a maximum endotherm peak observed in the range of 200°C to 280°C was defined as a melting point. The decrease of the melting point and the decrease of the degree of crystallinity were evaluated.
Measurement temperature profile: 25°C (kept for 0.2 minutes) → 265°C (kept for 0 minute) → 25°C (kept for 0 minute) × 2
The decrease of the melting point and the transition of the degree of crystallinity are shown in Table 2.
It has been established that the aliphatic ketone polymers according to the present invention have considerably improved stability while being heated and melted, and degrees of crystallinity maintained at high values.

Example 19

The polymer of Example 7 was used. To 100 parts by weight of the polymer were added 0.5 part by weight of an antioxidant (Irganox 245 manufactured by Ciba Specialty Chemicals), 0.2 part by weight of an ultraviolet absorbing agent (Tinuvin 1577 manufactured by Ciba Specialty Chemicals) and 0.5 part by weight of a processing stabilizer (hydroxyapatite manufactured by Wako Pure Chemical Industries, Ltd.). This mixture was fed to a twin-screw extruder (type: KZW15-45MG; 15 mm Φ; L/D = 45) manufactured by TECHNOVEL CORPORATION. The preset temperature of the extruder was 262°C. A resin was extruded from the die portion of the extruder as a strand. The strand was pelletized with a cutter. Thus obtained pellets were fed to a one ounce forming machine (type: FAS15-A) manufactured by FANUC LTD. to subject the pellets to injection forming at a forming temperature of 260°C to form a dumbbell shaped article and a strip shaped article (ASTM TP, 1st, 3mmt). Evaluation results are shown in Table 3.

Comparative Example 6

The polymer of Comparative Example 3 was used. To 100 parts by weight of the polymer were added 0.1 part by weight of an antioxidant (Naugard XL-1 manufactured by Uniroyal Chem.), 0.2 part by weight of an ultraviolet absorbing agent (Cyasorb UV-1164 manufactured by Cytec Industries) and 0.2 part by weight of a processing stabilizer (hydroxyapatite manufactured by Wako Pure Chemical Industries, Ltd.). This mixture was fed to a twin-screw extruder (type: KZW15-45MG; 15 mm Φ; L/D = 45) manufactured by TECHNOVEL CORPORATION. The preset temperature of the extruder was 250°C. A resin was extruded from the die portion of the extruder as a strand. The strand was pelletized with a cutter. Thus obtained pellets were fed to a one ounce forming machine (type: FAS15-A) manufactured by FANUC LTD. to subject the pellets to injection forming at a forming temperature of 260°C. A dumbbell shaped article and a strip shaped article (ASTM TP, 1st, 3mmt) were obtained by injection forming at 250°C.
Evaluation results are shown in Table 3.

While the ethylene/carbon monoxide alternating copolymer cannot be subjected to melt forming, the aliphatic ketone polymer according to the present invention can be subjected to melt forming, and shaped articles thereof have high mechanical properties.
It is to be understood that while the invention has been described in conjunction with the preferred specific embodiments thereof, variations and modifications can be made without departing from the spirit and scope of the invention as those skilled in the art understand easily. Therefore, the variations can be made within the scope of the invention.

[Table 1]

Table 1. Results of Polymerization

| No. | Temperature °C | Pressure MPa | Comonomer | Content wt% | NMR Mn×$10^4$ | GPC | | Tm °C |
|---|---|---|---|---|---|---|---|---|
| | | | | | | Mn×$10^4$ | MW/Mn | |
| Example 1 | 100 | 8 | PEG1000 | 6.3 | 1.5 | - | - | 250 |

(continued)

Table 1. Results of Polymerization

| No. | Temperature °C | Pressure MPa | Comonomer | Content wt% | NMR Mn×$10^4$ | GPC | | Tm °C |
|---|---|---|---|---|---|---|---|---|
| | | | | | | Mn×$10^4$ | MW/Mn | |
| Example 2 | 100 | 8 | PEG2000 | 5.5 | 3.4 | 7.1 | 3.27 | 251 |
| Example 3 | 100 | 12 | PEG1000 | 3.7 | 2.6 | 6.2 | 3.34 | 254 |
| Example 4 | 100 | 16 | PEG1000 | 1.0 | 10.3 | 11.8 | 3.04 | 257 |
| Example 5 | 100 | 16 | PEG2000 | 1.9 | 10.4 | 11.5 | 2.92 | 257 |
| Example 6 | 105 | 8 | PEG2000 | 6.5 | 2.9 | 7.1 | 2.95 | 257 |
| Example 7 | 95 | 8 | PEG1000 | 3.4 | 2.0 | - | - | 254 |
| Example 8 | 90 | 8 | GI-1000 | 3.0 | 4.9 | - | - | 253 |
| Example 9 | 90 | 8 | GI-2000 | 5.1 | 3.9 | 16.9 | 2.67 | 254 |
| Example 10 | 90 | 8 | GI-3000 | 3.6 | 8.4 | - | - | 252 |
| Example 11 | 90 | 16 | GI-1000 | 4.0 | 3.7 | - | - | 252 |
| Example 12 | 90 | 16 | GI-2000 | 3.9 | 5.1 | 30.9 | 2.46 | 254 |
| Example 13 | 90 | 16 | GI-3000 | 4.5 | 6.7 | - | - | 255 |
| Example 14 | 100 | 8 | GI-1000 | 2.3 | 6.4 | 5.3 | 3.57 | - |
| Example 15 | 100 | 8 | GI-2000 | 4.0 | 4.9 | 5.7 | 3.50 | - |
| Example 16 | 100 | 8 | GI-3000 | 2.6 | 11.6 | - | - | - |
| Comparative Example 1 | 100 | 8 | - | - | 2.3 | - | - | 252 |
| Comparative Example 2 | 100 | 8 | Propylene | 6.0 | - | 8.6 | 2.1 | 222 |
| Comparative Example 3 | 100 | 8 | Propylene | 5.9 | - | - | - | 221 |

[Table 2]

Table 2. Evaluation of Stability while being heated and melted

| | Example 17 | | Example 18 | | Comparative Example 4 | | Comparative Example 5 | |
|---|---|---|---|---|---|---|---|---|
| Belonging | (Example 1) | | (Example 8) | | (Comparative Example 1) | | (Comparative Example 2) | |
| Scanning number | Tm/ °C | Degree of Crystallinity/ % | Tm/ °C | Degree of Crystallinity/ % | Tm/°C | Degree of Crystallinity/ % | Tm/°C | Degree of Crystallinity/ % |
| 1st | 250 | 57 | 254 | 54 | 251 | 60 | 221 | 50 |
| 2nd | 235 | 33 | 243 | 33 | 230 | 27 | 214,221 | 33 |
| Δ (degree of degradation) | | -24 | -11 | -21 | -21 | -33 | Split | -17 |
| Stability | Good | | Good | | Poor | | Fair | |

[Table 3]

| Table 3. Evaluation Results of Resin Properties (ASTM Test Method) | | | |
|---|---|---|---|
| | | Example 19 Example<br>(Example 7) Example | Comparative Example 6<br>(Comparative Example 3) |
| Composition | | | |
| Antioxidant/phr | Irganox 245 | 0.5 | |
| | Naugard XL-1 | | 0.1 |
| Ultraviolet Absorbing Agent/phr | Tinuvin1577 | 0.2 | |
| | Cyasorb UV1164 | | 0.2 |
| Processing Stabilizer/phr | hydroxyapatite | 0.5 | 0.2 |
| Evaluation Results | | | |
| GPC Molecular Weight (pellet) | Mw | 198000 | 161500 |
| | Mn | 55300 | 80600 |
| | Mw/Mn | 3.56 | 2.00 |
| Tensile Yield Strength | D638:kg/cm$^2$ | 711 | 603 |
| Stretch at Break | D638:% | 32.0 | 176 |
| Bending Strength | D790:kg/cm$^2$ | 718 | 718 |
| Bending Modulus of Elasticity | D790:kg/cm$^2$ | 21600 | 20000 |
| Izod Impact Strength (with notch) | D256(25°C):kg-cm/cm | 18.8 | 8.4 |
| | D256(-30°C):kg-cm/cm | 5.35 | 2.75 |

INDUSTRIAL APPLICABILITY

The present invention makes it possible to provide an aliphatic ketone polymer that well balances melt formability for industrial use and mechanical properties, a method of manufacturing the aliphatic ketone polymer and a shaped article made of the aliphatic ketone polymer. The aliphatic ketone polymer is useful as a forming material, an elastomer material, a functional material for separation membranes, adhesives, sealers, fibers (industrial fibers, fabrics, knit fabrics, nonwoven fabrics or the like), or the like.

## Claims

**1.** An aliphatic ketone polymer comprising a unit represented by the following formula (1), and a unit represented by the following formula (2), and a unit represented by the following formula (3) or (4),

[Formula 1]

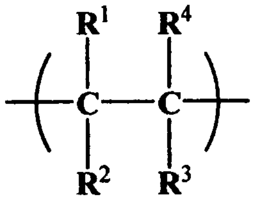

· · · (1)

[Formula 2]

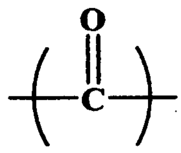

. . . (2)

[Formula 3]

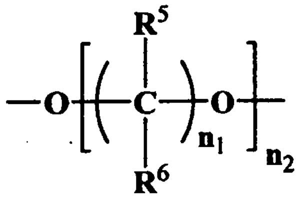

. . . (3)

[Formula 4]

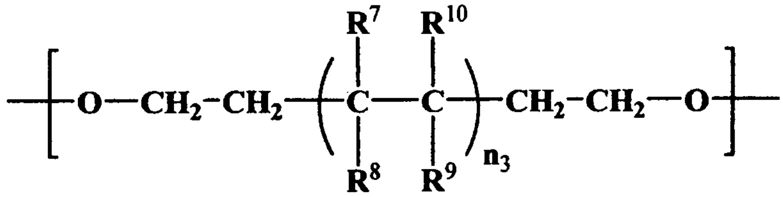

. . . (4)

wherein, $R^1$ to $R^{10}$ may be the same or different and are selected from the group consisting of hydrogen; a hydrocarbon group having 1 to 20 carbon atoms that may be substituted with a halogen(s); a halogen; a hydroxy group; an ester group; an alkoxy group; a cyano group; an imide group; a silyl group; and a hydrocarbon group having 1 to 20 carbon atoms substituted with a functional group selected from a hydroxy group, an ester group, an alkoxy group, a cyano group, an imide group, and a silyl group; $R^2$ and $R^3$, or $R^8$ and $R^9$ may be linked to form a monocycle or a polycycle; and $n_1$, $n_2$, and $n_3$ satisfy $1 \leq n_1 \leq 20$, $1 \leq n_2 \leq 35,000$, and $1 \leq n_3 \leq 40,000$.

**2.** The aliphatic ketone polymer according to claim 1, wherein the formula (1) is a unit derived from ethylene and/or an ethylenically unsaturated compound, the formula (2) is a unit derived from carbon monoxide, the formula (3) is a unit derived from a polyalkylene glycol, and the formula (4) is a unit derived from a hydrogenated conjugated diene polymer comprising an alcohol group.

**3.** The aliphatic ketone polymer according to claim 2, comprising 0.01 to 15% by weight of the unit derived from a polyalkylene glycol or the unit derived from a hydrogenated conjugated diene polymer comprising an alcohol group.

**4.** The aliphatic ketone polymer according to any one of claims 1 to 3, having a number average molecular weight in a range of 200 to 1,100,000 determined by GPC measurement.

**5.** A shaped article **characterized by** comprising the aliphatic ketone polymer according to any one of claims 1 to 4.

# FIG. 1

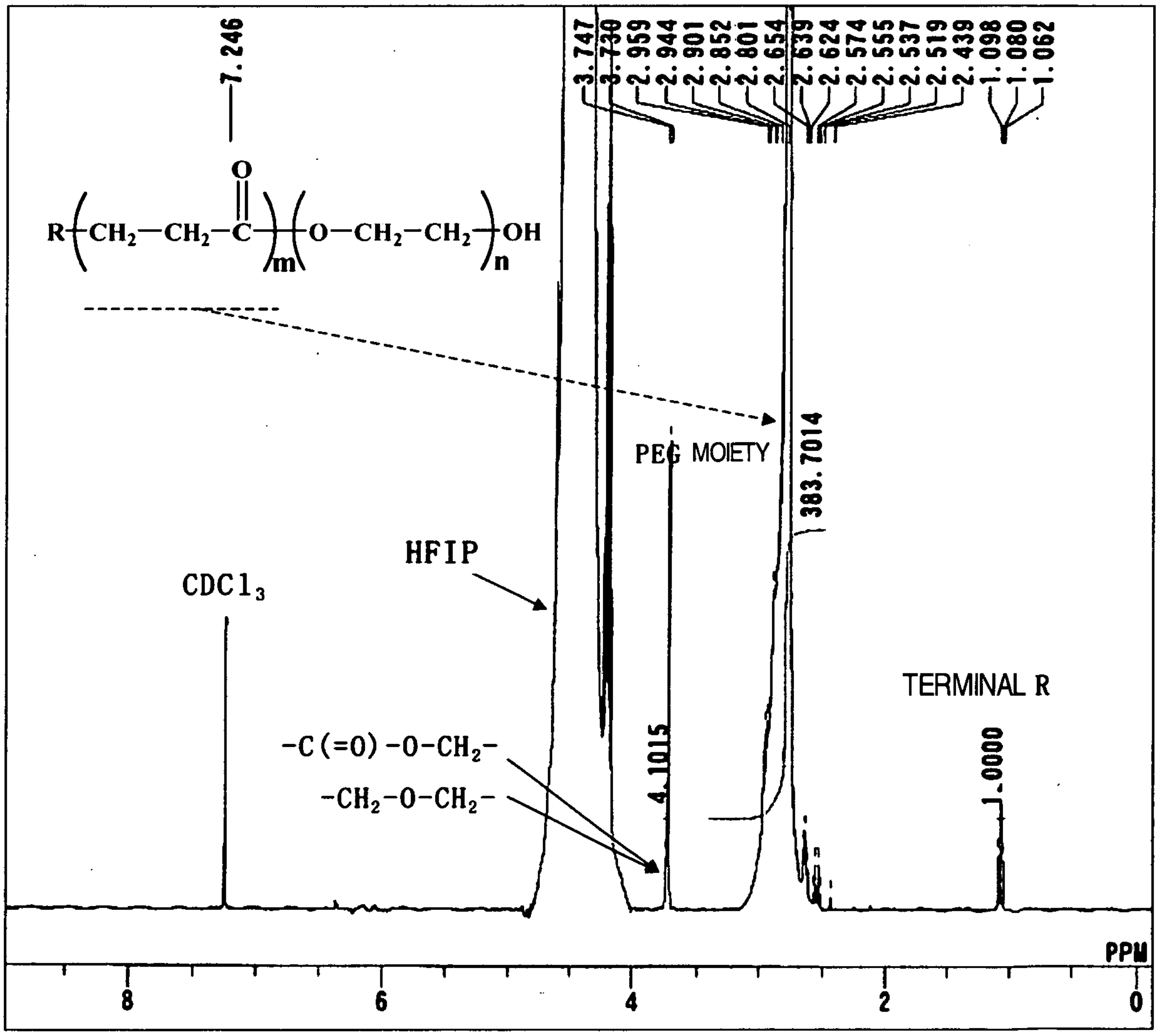
7.246
3.747
3.730
2.959
2.944
2.901
2.852
2.801
2.654
2.639
2.624
2.574
2.555
2.537
2.519
2.439
1.098
1.080
1.062
PEG MOIETY
383.7014
HFIP
CDCl3
TERMINAL R
-C(=O)-O-CH2-
-CH2-O-CH2-
4.1015
1.0000
PPM
8
6
4
2
0

FIG. 2

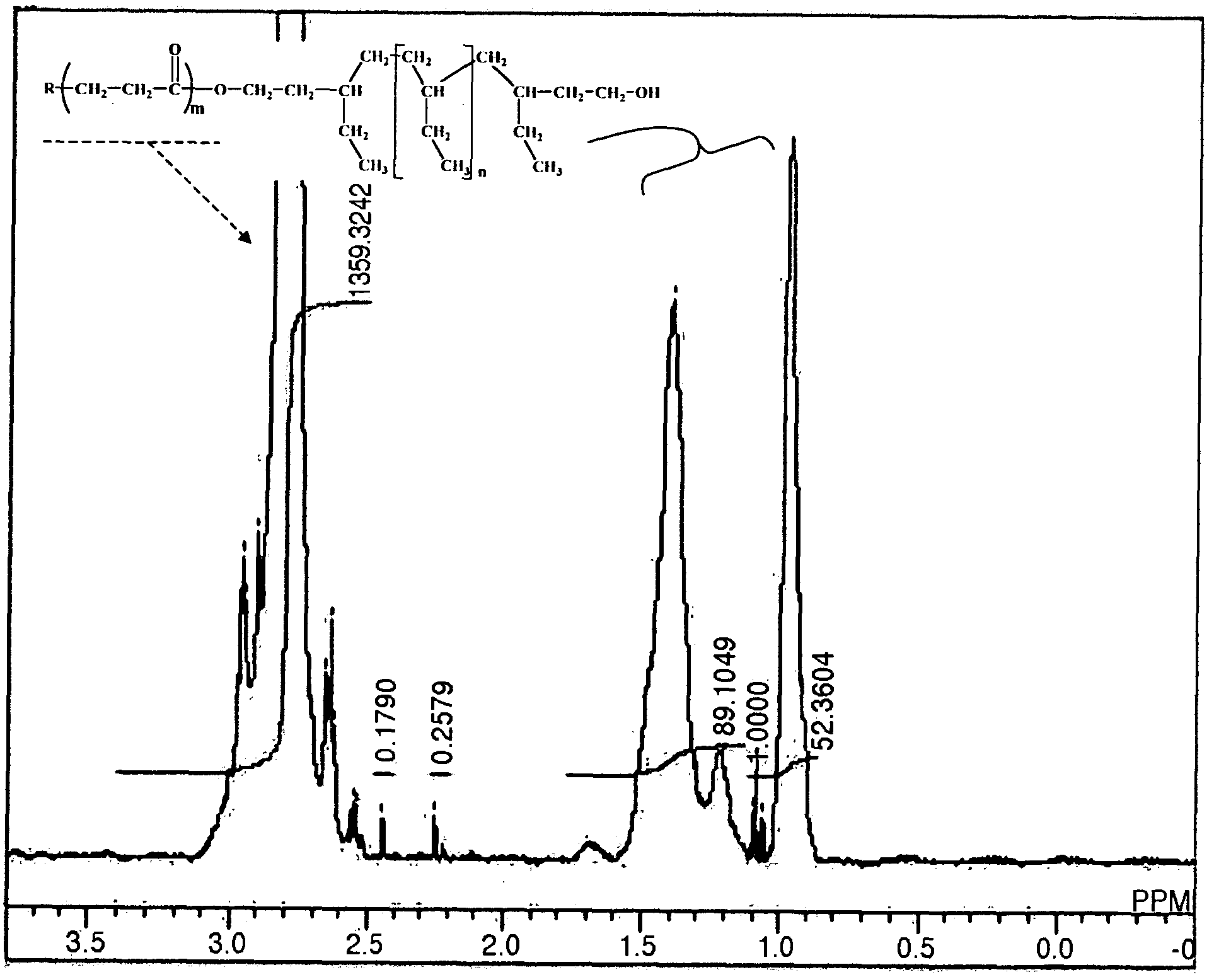
1359.3242
0.1790
0.2579
89.1049
1.0000
52.3604
PPM
3.5
3.0
2.5
2.0
1.5
1.0
0.5
0.0

**INTERNATIONAL SEARCH REPORT**

International application No.
PCT/JP2005/008491

A. CLASSIFICATION OF SUBJECT MATTER
Int.Cl[7] C08G67/02

According to International Patent Classification (IPC) or to both national classification and IPC

B. FIELDS SEARCHED

Minimum documentation searched (classification system followed by classification symbols)
Int.Cl[7] C08G67/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)
CAplus(STN)

C. DOCUMENTS CONSIDERED TO BE RELEVANT

| Category* | Citation of document, with indication, where appropriate, of the relevant passages | Relevant to claim No. |
|---|---|---|
| X | JP 5-295107 A (Asahi Chemical Industry Co., Ltd.), 09 November, 1993 (09.11.93) Claims; Par. No. [008] (Family: none) | 1-5 |
| X | JP 6-32897 A (Shell International Research Maatschappij B.V.), 08 February, 1994 (08.02.94), Claims; Par. Nos. [0003], [0006] & US 5359028 A EP 570055 A1 | 1,3-5 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21 July, 2005 (21.07.05) | 09 August, 2005 (09.08.05) |
| Name and mailing address of the ISA/ Japanese Patent Office | Authorized officer |
| Facsimile No. | Telephone No. |

Form PCT/ISA/210 (second sheet) (January 2004)

**INTERNATIONAL SEARCH REPORT**

International application No.
PCT/JP2005/008491

C (Continuation). DOCUMENTS CONSIDERED TO BE RELEVANT

| Category* | Citation of document, with indication, where appropriate, of the relevant passages | Relevant to claim No. |
|---|---|---|
| A | JP 2752167 B2 (Shell International Research Maatschappij B.V.), 27 February, 1998 (27.02.98), Claims & US 5096965 A & EP 349084 A2 & DE 68906316 A1 | 1-5 |

Form PCT/ISA/210 (continuation of second sheet) (January 2004))

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0121965 A
- JP 62053332 A
- US 5066701 A
- JP 2752167 B
- JP 2002348401 A


### Non-patent literature cited in the description


- Encyclopedia Chimica. KYORITSU SHUPPAN CO., LTD, 1974, vol. 7, 4